# EUROPEAN PATENT APPLICATION

(11) **EP 0 818 307 A1**
(43) Date of publication of application: **14.01.1998**
(21) Application number: 97304823.4
(22) Date of filing: 02.07.1997
(51) Int. Cl.: B41B 19/00, B41B 21/32

(54) **Internal rotating drum plotter**

(30) Priority: 07.07.1996 IL 11880896
(71) Applicant: SCITEX CORPORATION LTD., IL-46103 Herzlia Bet (IL)
(72) Inventor: Benizri, Ilan, 46364 Herzlia (IL)
(74) Representative: Freed, Arthur Woolf

(57) **Abstract**

A plotter for recording an image on a sheet of light sensitive flexible medium. The plotter includes a drum having a wall with a cylindrical inner surface, which is adapted to have the sheet attached thereto. The drum is rotatable about the geometric axis of the cylindrical inner surface. The plotter also includes an electro-optical assembly for projecting at least one modulatable light beam onto the inner surface.

## Description

### FIELD AND BACKGROUND OF THE INVENTION

The present invention relates to a graphic plotter and, more particularly, to a graphic plotter for plotting on large format films and printing plates.

In the process of digitally preparing printing plates, there is the all important step of recording the digital image -- either directly onto the plate or onto a film, from which it is subsequently copied onto the plate. This recording step is usually carried out by exposing the plate, or the film, to a scanning spot of radiant power, whose intensity is modulated according to the image infotmation. By and large this radiant power is electromagnetic radiation, which, in most cases is in the optical range, i.e. from infra-red to ultra-violet; the radiant power will therefore be referred to hereunder as light, without implying loss of generality. The radiation source is often a laser and its light is focused onto the sensitive surface of the film or plate by means of an optical head. The equipment that carries out this recording operation is variously called image recorder, image setter, laser plotter, or just plotter.

There are several configurations of plotters known in the art. They may be classified into two general categories: In configurations of the first category the spot of light moves relatively fast, scanning the sensitive surface of the film or the plate along straight lines. Two common particular configurations in this category are the so-called capstan-drive plotter and the so-called flat-bed plotter. In a capstan-drive plotter the film or plate is made to slowly move tangentially over part of the surface of a cylinder, or roller, while the light spot is scanned in a path parallel to the axis of that cylinder. In a flat-bed plotter the film or plate is attached to a flat carrying surface and the spot of light is made to scan fast along one axis ofthat surface and slowly (by means of relative mechanical motion between the optical assembly and the canning surface) - along the orthogonal axis. In both of these configurations the fast scan is effected by means of a scanning optical head. In order for the light spot to remain in focus and with uniform intensity along the entire scan line, the scanning head optics need be rather complex and this is a major drawback ofthe first category. The capstan-drive configuration also has a major disadvantage in the difficulty with which the film can be moved precisely enough; for this reason it is largely limited to plotting on continuous web of film or paper. Flat-bed plotters have the disadvantages of being bulky and inherently extensive to fabricate.

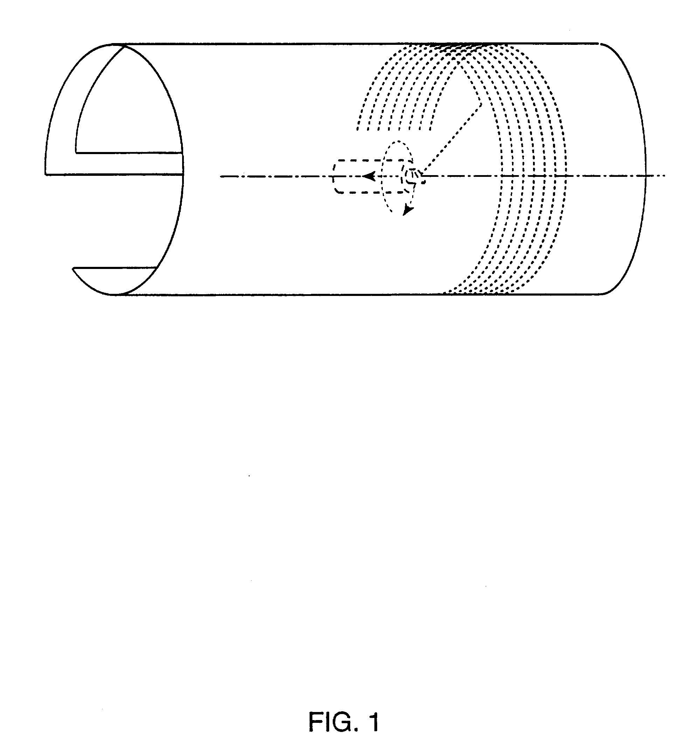

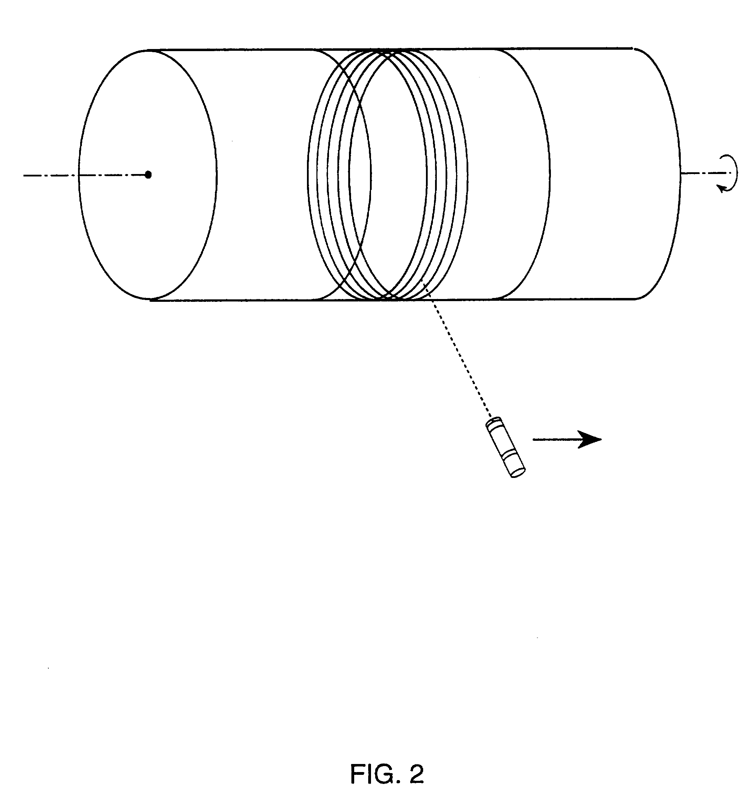

In configurations of the second category the spot of light scans the sensitive surface of the film or the plate relatively fast along circular paths that lie on the surface of a cylinder. Because of this circular geometry, the distance between the light spot and the center of the optical head remains constant and thus the optical head, whether scanning or not, may be relatively simple. Two common particular configurations of the second category are the so-called external-drum plotter, depicted schematically in Fig. 2, and the so-called internal-drum plotter, depicted schematically in Fig. 1.

The external-drum plotter typically consists of a rotatable drum to whose external cylindrical surface the plate or film are attached, and an optical head that projects one or more light spots onto the sensitive surface of the attached plate or film. During plotting, the drum rotates about its axis at a relatively high speed, while the optical head moves slowly in a path parallel to that axis. The film is usually held on to the surface of the drum by means of vacuum supplied through pores in that surface. In the case of plates either vacuum or a tensory clamping mechanism is used.

The internal-drum plotter typically consists of a non-rotating member that features a concave cylindrical surface and an optical head inernal to that surface; the optical head includes a mirror or prism that is rotatable about the axis of the cylinder forming the surface. The film or plate are usually attached to the cylindrical surface by tangential force and/or by vacuum and the optical head projects a light spot onto its sensitive surface. During plotting, the mirror or prism in the optical head rotates at relatively high speed, causing the light spot to scan the film tangentially. The optical head slowly moves in a path parallel to the axis of the cylinder.

A major drawback of external drum plotters is the need for a strong centripetal force to keep the film or plate attached to the surface of the drum, providing the necessary bending moment, but mainly overcoming centrifugal inertia. For the latter, the minimum required force is proportional to the mass ofthe plate and to the square ofthe rotational speed; it is thus particularly strong for fast rotating plotters with metal plates. As mentioned, two means are used to provide this attaching force -- tangential tension and vacuum Tangential tension applied alone must be very high if it is to provide the necessary centripetal force (in the radial direction). This requires a rather elaborate plate clamping mechanism on the drum Vacuum applied alone has two disadvantages: (1) The maximum attainable centripetal force is limited by atmospheric pressure (about 1 Kg/cm²); (2) in case of vacuum failure the plate may fly off the drum at very high speed and thus can damage other components of the plotter. Applying both means together may unduly raise the cost of the plotter.

A major drawback of internal drum plotters is that the optics of the scanning head usually limit it to projecting a single spot of light onto the film or plate. Simultaneously projecting multiple spots, which is desirable for increasing the effective plotting rate at any given scanning speed, is possible relatively easily in all other plotter configurations; in internal drum plotters, however, such capability would require rather complex optics. Such complex optics, besides being inherently expensive, may burden the dynamic mechanical balancing of the rotating head, especially at very high speeds, which may, in turn, adversely affect attainable precision.

Two current trends in the prepress industry are (1) the increasing incidence of direct exposure of printing plates, bypassing the stage of intermediate film plotting (and thus saving time and expenses), and (2) the demand for ever higher plotting speed -- to keep up with the output of the faster image processors. Direct exposure of printing plates is traditionally carried out on external- and internal drum plotters and on flat-bed plotters. Their limitations, especially at higher plotting speeds, have been pointed out hereabove. Speeding up external drum plotters eventually runs into the mechanical problems of maintaining the ever greater necessary centripetal forces. Increasing the effective plotting rate of internal drum plotters, where the rotational scanning speeds of optical heads have already approached the theoretical maximum, would require using multiple spots; as pointed out hereabove, this would mandate an increase in the optical complexity of the head, which, in turn, would reduce the attainable rotational speed and thus very little overall gain in rate will be achieved.

There is thus a widely recognized need for, and it would be highly advantageous to have, an improved plotter, capable of plotting at high rates on films as well as on massive plates, that avoids the drawbacks of conventional plotters as outlined hereabove.

### SUMMARY OF THE INVENTION

The present invention successfully addresses the shortcomings of the presently known configurations by providing a graphic plotter that can economically record, or plot, images at relatively high rates on relatively thick films and plates.

The present invention discloses a novel configuration of a graphic plotter consisting of a rotating drum and a non rotating optical assembly internal to the drum.

More specifically, the plotter of the present invention has a rotatable drum, to whose internal cylindrical surface a sheet of the plotting medium is attachable, so as to rotate therewith. Inside the drum there is an optical assembly, at least part of which is movable along a path parallel to the drum's axis, that projects one or more modulatable light spots onto the attached plotting medium. A relatively simple mechanism is used to attach the sheet to the drum, while centrifugal effects aid in making the sheet conform to the drum's internal surface. Provision is also made for loading and unloading the sheet through a slot in the wall of the drum.

According to the present invention there is provided a plotter for recording an image on a sheet of light sensitive flexible medium, comprising (a) a drum having a wall with cylindrical inner surface to which the sheet is attachable, the drum being rotatable about its geometric axis, and (b) an electro-optical system, projecting at least one modulatable light spot onto the inner surface of the drum wall.

According to further features in preferred embodiments of the invention described below, all or part of the electro-optical system is movable along a path parallel to the axis of the drum.

According to still further features in the described preferred embodiments, the electro-optical system comprises a laser and a beam splitting acousto-optic modulator, or alternatively, a linear array of light modulators or of modulatable light sources.

According to other features in the described preferred embodiments, the wall of the drum has a slot therethrough, enabling insertion of the sheet into the drum for attachment to its inner surface. There is also provided a mechanism for moving and holding the sheet inside the drum and there is optionally provided a loading mechanism for loading the sheet from a cassette.

According to an alternative configuration of the plotter, also the outer surface of the drum is scannable -- either for plotting on a medium attached thereto or for reading an image attached thereto.

### BRIEF DESCRIPTION OF THE DRAWINGS

The invention is herein described, by way of example only, with reference to the accompanying drawings, wherein:
FIG. 1 is an isometric sketch of an internal drum plotter according to prior art;
FIG. 2 is an isometric sketch of an external drum plotter according to prior art;
FIG. 3 is a schematic cross sectional view of a plotter according to a preferred embodiment of the present invention;
FIG. 4A is a schematic cross sectional view of the electro-optical assembly in a preferred embodiment of the present invention;
FIG. 4B is a schematic cross sectional view of an alternative configuration of the electro-optical assembly of Fig. 4A.
FIG. 5 is a schematic cross sectional view of the electro-optical assembly in another preferred embodiment of the present invention;
FIG. 6 is a view of the electro-optical assembly in yet another preferred embodiment of the present invention;
FIG. 7 is an isometric view of the drum according to a preferred embodiment of the present invention.
FIG. 8 is a cross-sectional view of the drum according to an improved embodiment of the present invention

### DESCRIPTION OF THE PREFERRED EMBODIMENTS

The present invention is of a graphic plotter which can be employed to record electronically provided images on large format films and printing plates. Specifically, the present invention can be used to economically record, or plot, at relatively high rates on relatively thick films and plates.

The principles and operation of a plotter according to the present invention may be better understood with reference to the drawings and the accompanying description.

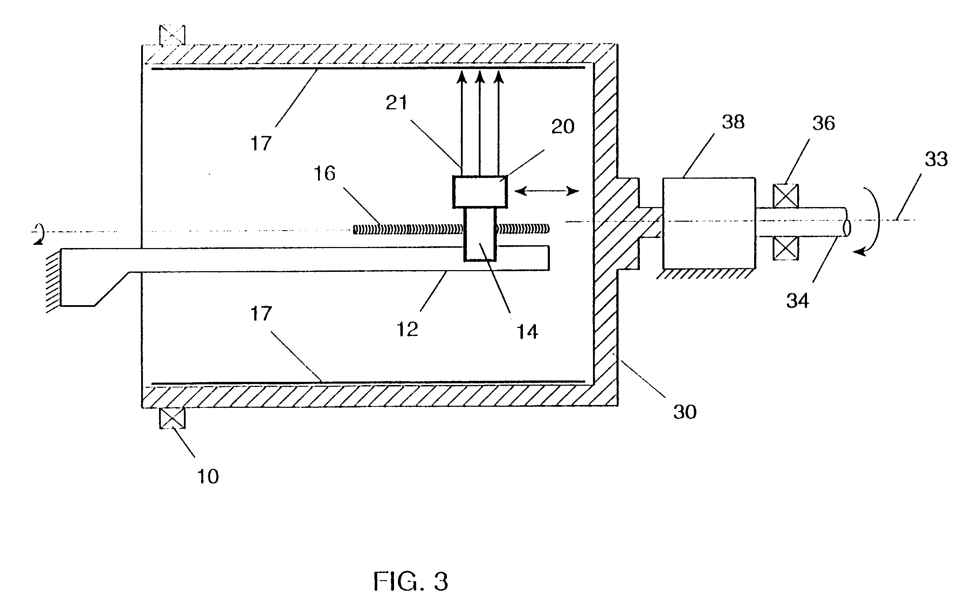

Reference is first made to Fig. 3, which is a cross-sectional view of a preferred embodiment of the plotter according to the present invention. There is shown a drum **30** rotatable about a horizontal axis **33**. One end of the drum is closed and rigidly attached to a shaft **34** which is supported by bearing **36** and rotationally driven by a motor **38**. Also attached to the shaft is a rotational encoder (not shown), which continuously feeds control circuitry with information about the drum's angular position. The other end of the drum **30** is open and supported by a ring-shaped bearing **10**. The inside surface of the drum is machined to a precise cylindrical shape, whose axis is made to coincide with the axes of the two bearings. Inside drum **30** there is disposed a rail **12** parallel to the axis of the drum Rail **12** extends to beyond the open end of the drum, where it is rigidly held by a support structure (not shown). Inside the drum the rail extends to near its closed end. It is appreciated that other configurations for rotationally supporting the drum are possible.

A carriage **14** is slidable along rail **12** in a path parallel to the axis of the drum. The carriage is driven along this path by a lead screw **16** attached to an external motor (not shown). It is appreciated that any of a number of other means known in the art may be employed to move the carriage. Optionally, there may also be an encoder (not shown), to monitor the position ofthe carriage at any moment. To carriage **14** there is attached at least part of an electro-optical assembly **20**, which projects one or more light beams **21** in a radial direction onto the inner surface of the drum, where a plate or film **17** is attached in a manner to be explained herebelow. The light beams are focused to form small Spots on the inner (sensitive) surface of plate **17**, which are preferably arranged along a line parallel to the axis of the cylinder.

There are a number of ways known in the art to embody the electro-optical (EO) assembly **20**, many of which have been employed in external-drum plotters. Almost all of these can also be employed, with minor or no modifications, in the plotter of the present invention. It is noted that the distance of the EO assembly from the surface of the drum has no relationship to the drum's axis (unlike conventional internal-drum plotters) and is determined by mechanical and optical considerations only. The following embodiments are described by way of example; it is appreciated, however, that also other embodiments are possible within the scope of the present invention.

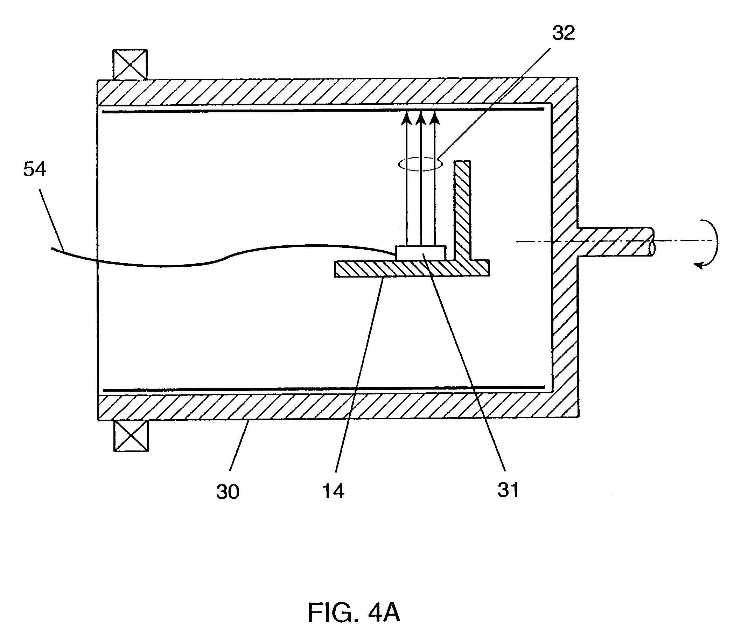

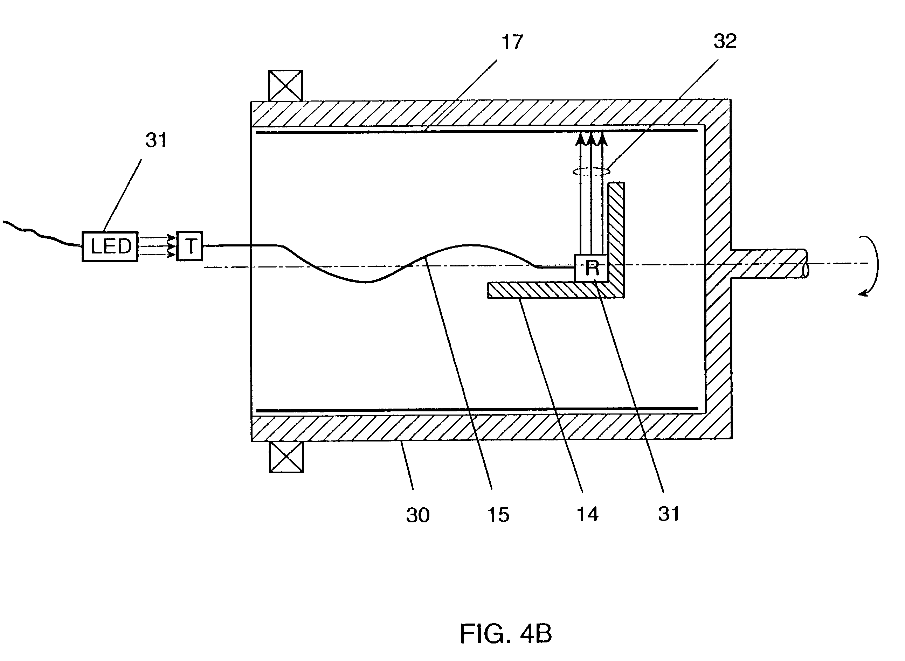

According to one embodiment, depicted in Fig. 4A, the entire electro-optical assembly is mounted on carriage **14** and includes an array of modulatable light sources **31**, preferably light-emitting diodes (LEDs), which are focused onto the sensitive surface **17** by an objective lens **32**. The array of light sources, which may include driving circuitry, is connected by electric wires **54** to outside circuitry (not shown). In an alternative configuration, depicted in Fig. 4B, the LEDs **31** are mounted in a fixed position outside the drum; the light emitted from them is coupled into the input end of a bundle of optical fibers **15**, marked 'T', carried by the fibers to the output end, marked 'R', which is mounted on carriage **14** and projected by lens **32** onto the inner surface of the drum.

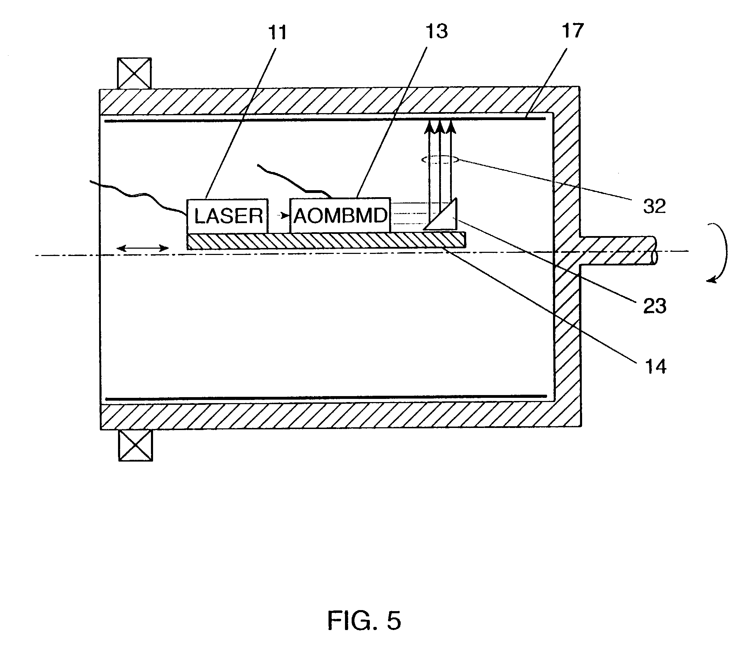

According to another embodiment, depicted in Fig. 5, the electro-optical assembly, again entirely mounted on carriage **14**, consists of light source **11**, preferably a laser, projecting a beam of light, an acousto-optic multi-beam modulator/deflector (AOMBMD) **13**, possibly a fixed deflection mirror **23** and several lenses (not shown). AOMBMD **13**, upon application of appropriate electrical voltage signals, acts to split the beam into several subbeams, deflecting them at various angles and modulating each one according to image information. A lens **32** acts to focus the subbbeams onto the surface ofplate **17**.

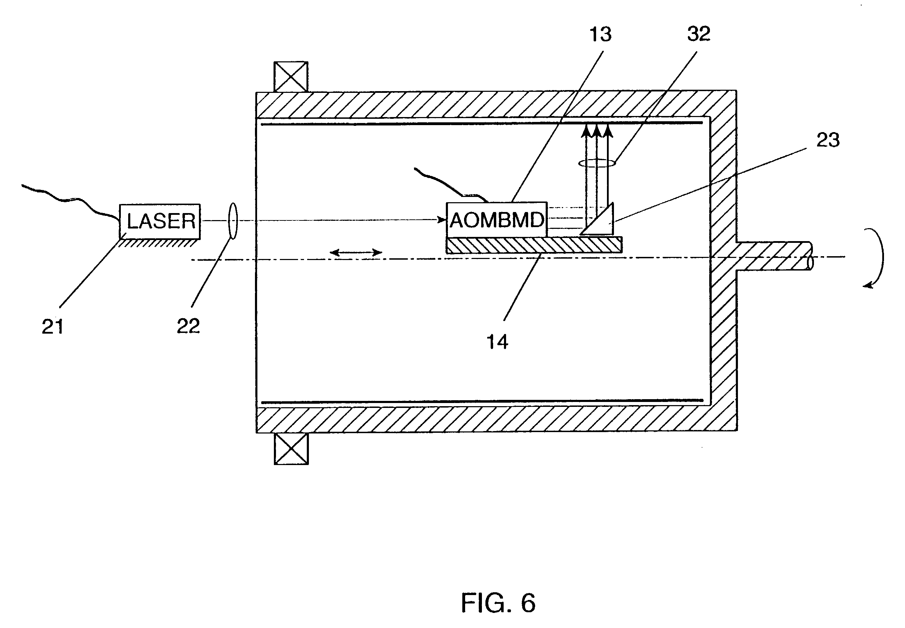

According to yet another embodiment, depicted in Fig. 6, a stationary light source **21**, preferably a laser, and a collimating lens **22** are mounted outside the drum so as to project a collimated light beam parallel to the drum's axis into the drum. The rest of the electro-optical assembly, mounted on carriage **14**, is essentially as described above for Fig. 5.

The film or plate to be exposed **17** is attachable to the inner surface of the drum in any of a number of ways. The mechanically simplest way is to manually insert the plate into the drum through its open end and to attach one edge of the plate, preferably the leading edge, onto the drum's inner surface by means of a clamp, disposed lengthwise. During subsequent rotation of the drum, centrifugal inertia will act to push the entire plate onto the drum's surface. If the plate is too stiff to thus wholly adhere to the cylindrical surface, a vacuum system may be employed for the purpose.

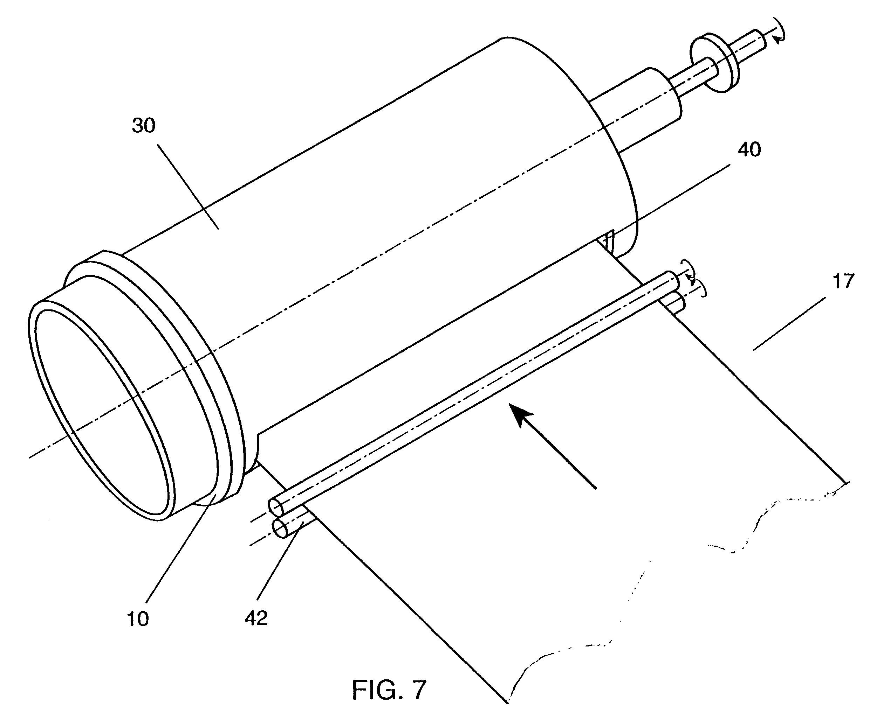

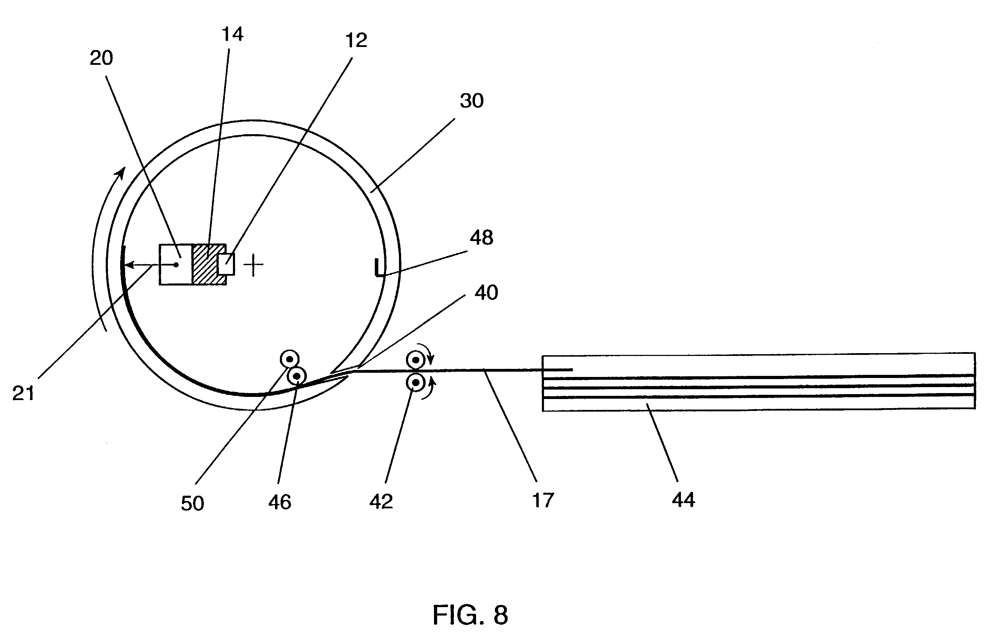

According to a preferred embodiment, depicted in Fig. 7 and, as cross section, in Fig. 8, there is a slot **40** through the body of drum **30** over its entire length. The center plane of the slot is inclined at an angle to the radial plane. Slot **40** serves to feed a plate (or film) **17** into the drum, as well as to withdraw it from the drum. Plate (or film) **17** is usually fed from a cassette **44** into the slot with the aid offeed rollers **42**. One way of loading plates from a cassette is disclosed in U.S. patent application No. 08/501,839 by the assignee of the present application. Once inserted through the slot, the plate is guided onto the inner surface of drum **30** and pushed along that surface by the frictional action of main roller **46**, which is mounted on the drum in proximity to its inner surface. Main roller **46** is free to rotate with respect to the drum only while the latter is in its so-called home position, namely during loading or unloading. The rotation of roller **46** is frictionally imparted by means of a short drive roller **50** which is pressed against roller **46** and, in turn, rotated by a an external motor (not shown). At all other times, notably during the drum's rotation, main roller **46** is out of contact with drive roller **50** and is locked, so as to keep the plate in a fixed position with reject to the drum. A stop bar, or clamp, **48**, attached to the drum, serves to stop the leading edge of the plate during loading and to press it toward the inner surface of the drum during plotting. Further details of the plate guiding mechanism are described, for example, in U.S. Patents 4,813,709 and 5,488,906 to the assignee of the present application.

Operation of the plotter according to the preferred embodiment will now be described, with reference to Figs. 3 and 8. The plotted medium is assumed to be a printing plate, but other media and, in particular, photographic film sheets may be used in essentially the same manner. There are three stages of operation -- loading, plotting and unloading.

During the loading stage the drum is locked in its home position. A fresh plate **17** is inserted through slot **40** in drum **2**, with its sensitive face directed inwards. The plate is gripped and pushed by main roller **46** so that its leading edge slides along the inner surface of the drum until it is stopped by stop bar **48**, at which instant the whole length of the plate is present inside the drum. The plate is pushed by main roller **46** somewhat more until the plate conforms to the inner drum's surface by tangential force. Then main roller **46** is locked and disengaged from drive roller **50**; possibly also clamp **48** is engaged. At this point of time, the drum is unlocked from its home position and motor **8** is activated to rotate the drum and bring it up to operational speed.

At the beginning of the plotting stage carriage **14** is in one extreme position of its travel range and the drum rotates at its operational speed. At this point optional calibration and zeroing operations may take place as is known in the art. To plot an image, the carriage, with the optical assembly (or part thereof) mounted on it, is made to move slowly along its path; the motion may be continuous or in steps. Light beams **21** focused onto the sensitive surface ofplate **17** accordingly trace each either a helix or a series of parallel circles. The speed of the carriage, or the pitch of the step motion, is controlled and adjusted so that the traces ofthe various spots exactly interlace. Meanwhile, signals are applied to multi-beam modulator **13** (Figs. 5 and 6) or to the LEDs **31** (Figs. 4A and 4B) according to image data obtained at the plotter's input terminals, and the light intensity of the corresponding subbeams is modulated accordingly, thus correctly exposing every pixel on the plate. The timing of the modulating signals is controlled, in accordance with signals obtained from the rotational encoder, so as to correctly and consistently position the resulting intensity variations in the tangential direction. Plotting operation ceases when either the end of the image or the end of the plate or the end of the carriage's travel range (whichever comes first) has been reached. It will be noted that the plotting operation is very similar to that of an external drum plotter.

During the unloading stage, the following occurs in sequence. The rotating drum is brought to a halt and locked at the home position. Clamp **48** is released and the drive roller is activated to rotate main roller **46** backwards, so as to push the plate back to and through slot **40**. Finally the plate is pulled out through the slot into an unloading cassette (not shown).

There are several alternative configurations and embodiments for loading and unloading the plate onto and from the drum and for holding it attached to the inner surface during plotting. Some of these are also applicable to, or have been proposed for conventional internal drum plotters. For example, US patent 5,488,906, assigned to the present applicant, teaches several ways of loading and unloading the plates. as well as holding the plate on the drum's inner surface in exact registration. A drum of the present invention, with a slot therethrough, when locked in the home position, is mechanically quite similar to a conventional, stationary, drum. Therefore the teachings of the '906 parent can be embodied within the present invention with modifications obvious to practitioners of the art. Such modifications may include, for example, provisions for engaging mechanical and electrical connections to the drum while it is in the home position and disengaging them when the drum rotates. If vacuum is necessary for making the plate adhere to the inner surface, the relevant surface structure described in the '06 patent can be applied; central vacuum supply to the rotating drum may be similar to that of conventional external drum plotters.

It is noted that a plotter according to the present invention is an internal drum plotter (IDP), but with a rotatable drum as in an external drum plotter (EDP) and that it thus possesses advantages ofboth: Like an EDP it enables the employment of multiple beams, thus increasing effective plotting rate for any given rotational speed. Also in common with the EDP, it avoids the disadvantageous sensitivity to mechanical inaccuracies in the rotating optical assembly, present in a conventional IDP. Like an IDP it is inherently compact and does not have the problem of fastening the plate, especially a massive plate, onto the drum at high rotational speeds. A plotter according to the present invention, moreover, has the additional advantage that centrifugal effects due to drum rotation actually aid in making the plate conform to a cylindrical surface. The invention thus uniquely enables very high plotting rates on any flexible medium by allowing both high scanning speed and multiple-beam exposure.

A plotter according to the present invention lends itself to a number of practical configurations -- primarily by utilizing the external surface of the rotating drum. For example, the outer surface may be configured to function as an external drum plotter, by providing means, such as clamps or vacuum, for attaching a medium onto it and an external electro-optical system for exposure. Such a configuration could be used, or instance, to expose a proofing medium simultaneously with exposing the plate inside the drum. As another example, the outer surface may be configured to function as an input scanner (i.e. image reader), by providing means for attaching an image carrying sheet onto it and an electro-optical reading head traveling along the drum. Such a configuration could be used, for instance, to effect direct plate preparation from an original or to directly produce color separations.

While the invention has been described with respect to a limited number of embodiments, it will be appreciated that many variations, modifications and other applications of the invention may be made.

## Claims

1. A plotter for recording an image on a sheet of light sensitive flexible medium, comprising:
(a) a drum having a wall with a cylindrical inner surface, which is adapted to have the sheet attached thereto, said drum being rotatable about the geometric axis of said cylindrical inner surface; and
(b) an electro-optical assembly for projecting at least one modulatable light beam onto said inner surface.

2. The plotter of claim 1, wherein at least part of said electro-optical assembly is inside said drum and is movable along a path parallel to said geometric axis.

3. The plotter of claim 1, wherein said wall of said drum has a slot therethrough for insertion of the sheet into said drum for attachment to said inner surface.

4. The plotter of claim 3, further comprising a mechanism for moving the sheet inside the drum and for holding it in a fixed position with respect to the drum.

5. The plotter of claim 3, further comprising a mechanism for loading the flexible medium from a cassette into said drum.

6. The plotter of claim 1, wherein said electro-optical assembly includes at least one acousto-optic modulator.

7. The plotter of claim 1, wherein said electro-optical assembly a linear array of modulatable light sources.

8. The plotter of claim 1, wherein said drum has a cylindrical outer surface and the plotter is configured to enable plotting on a medium attached to said outer surface.

9. The plotter of claim 1, wherein said drum has a cylindrical outer surface and the plotter is configured to enable reading an image on a medium attached to said outer surface.
